(19) Europäisches Patentamt
European Patent Office
Office européen des brevets

(11) EP 0 201 460 B2

(12) **NOUVEAU FASCICULE DE BREVET EUROPEEN**

(45) Date de publication et mention de la décision concernant l'opposition:
**04.11.1998 Bulletin 1998/45**

(45) Mention de la délivrance du brevet:
**04.01.1995 Bulletin 1995/01**

(21) Numéro de dépôt: **86810195.7**

(22) Date de dépôt: **30.04.1986**

(51) Int Cl.[6]: **G01P 5/00**

(54) **Appareil pour déterminer par échographie Doppler ultrasonique des vitesses à l'intérieur d'un fluide en mouvement**

Gerät zum Bestimmen von Geschwindigkeiten mittels Ultraschall-Doppler-Echographie im Inneren eines sich bewegenden Fluids

Apparatus for determining speeds with the aid of ultrasonic Doppler-echography in the interior of a moving fluid

(84) Etats contractants désignés:
**AT BE CH DE FR GB IT LI LU NL SE**

(30) Priorité: **09.05.1985 CH 2009/85**

(43) Date de publication de la demande:
**12.11.1986 Bulletin 1986/46**

(73) Titulaire: **MET-FLOW SA**
**CH-1000 Lausanne 13 (CH)**

(72) Inventeur: **Takeda, Yasushi**
**CH-5200 Brugg (CH)**

(74) Mandataire: **Micheli, Michel-Pierre et al**
**c/o Kirker & Cie S.A.,**
**122, route de Genève,**
**P.O. Box 65**
**1226 Genève-Thônex (CH)**

(56) Documents cités:
**US-A- 3 554 030** **US-A- 4 324 258**

- **1974 WESCON TECHNICAL PAPERS, vol. 18, 1974, Western Periodicals Co., pages 1-10, North Hollywood, US; W.S. FOLETTA et al.: "Pulsed ultrasonic Doppler flowmeter applications in medicine"**
- **R.S. RENEMAN: "Cardiovascular applications of ultrasonics"; Proceedings of an International Symposium held at Beerse, 29-30 May 1973, pages 85-107, Amsterdam, NL; F.D: McLEOD: "Multichannel pulse Doppler techniques"**
- **Doriot, Pierre-André, "Blutflussmessung mit Hilfe eines mehrkanaligen Ultraschall-Doppler-Gerätes", pages 8-71, Zürich, 1976**

EP 0 201 460 B2

## Description

La présente invention concerne un appareil pour la détermination par échographie Doppler ultrasonique des vitesses locales à l'intérieur d'une région choisie d'une masse de fluide en mouvement contenant des particules solides, du type comprenant au moins un transducteur actif durant une pluralité de cycles pour émettre à travers ce fluide et selon un axe acoustique des trains périodiques d'ultrasons au cours de cycles successifs de période T, et pour recevoir l'écho dû à la réflexion selon cet axe de ces trains d'ondes par lesdites particules, des moyens pour mesurer la vitesse du fluide, au moins un circuit pour commander l'affichage sur un écran cathodique de la courbe des vitesses de l'effet Doppler dû à la vitesse des particules et représentative de la vitesse du fluide en fonction de la distance le long de cet axe, l'appareil comportant un générateur d'une fenêtre de mesure d'une position, d'une largeur et d'un nombre de canaux donnés, ce générateur présentant des moyens de retard pour définir ladite position de la fenêtre constitués par un circuit de retard agencé de façon à couper à chacun des cycles la transmission du transducteur au moins au tube à écran cathodique au moins pendant une durée initiale T1 qui précède le début de la partie ascendante de la courbe des vitesses de façon que le début de la fenêtre de mesure est déterminé par ladite durée initiale T1, le générateur de fenêtre comportant, en outre, un oscillateur à fréquence réglable pour fournir périodiquement des impulsions d'une durée prédéterminée $\tau$ correspondante à la durée d'un canal de mesure contenu dans ladite fenêtre et des moyens pour régler la fréquence de cet oscillateur, lesdits moyens pour mesurer la vitesse du fluide étant agencés de façon à déterminer la vitesse pour chacun des canaux de mesure contenu dans la fenêtre de mesure.

On connaît un appareil de ce type décrit dans la thèse de doctorat No 5746 de l'Ecole Polytechnique Fédérale de Zürich (1976) présenté par P.-E. Doriot et intitulée (Blutflussmessung mit Hilfe eines mehrkanaligen Ultraschall-Doppler-Gerätes". Cet appareil comporte une unité de commande qui contrôle l'émission des trains d'ultrasons et qui ouvre et ferme séquentiellement les n canaux de mesure que comporte l'appareil. Le retardement et la largeur d'un intervalle d'observation sont représentés sur un écran cathodique. Dans cet appareil on fixe d'abord l'ouverture et la fermeture, donc la largeur de la fenêtre de mesure par des moyens visuels ou acoustiques. Après l'écoulement de la durée de retard, le circuit électronique de cet appareil enclenche un oscillateur digital, dont la fréquence de répétition est déterminée par la largeur de la fenêtre G. Les impulsions générées dans cet oscillateur servent à subdiviser la fenêtre G en 15 intervalles de durée g = G/15. Ces intervalles sont ouverts et fermés séquentiellement. La largeur de la fenêtre est donc un paramètre passif issu de la mise en place du premier et dernier canal au moyen d'observation visuelle et/ou acoustique. Citons encore le document Traité d'électricité de l'EPFL, Volume V, Analyse et synthèse des systèmes logiques par Daniel Mange. Ce document décrit l'usage d'élément FLIP-FLOP et AND dans des circuits à système séquentiels quasi-synchrones.

Signalons également le document Logic Databook, Volume 1, de National Semiconductor qui décrit en pages 3-22, 3-43 et 3-56 des éléments AND, OR et FLIP-FLOP en technologie microCMOS.

Dans un article paru dans IEEE Transactions on sonics and ultrasonics, vol. SU-28, No 4, Juillet 1981, pages 242 à 244, les auteurs A.P.G. Hoeks, R.S. Reneman et P.A. Peronneau, décrivent également un dispositif multicanal Doppler avec un traitement de données en série. Dans ce dispositif, la largeur d'un canal de mesure doit correspondre à la durée d'émission des ultrasons pour obtenir la meilleure résolution. En outre, le moment lors duquel le premier échantillon de mesure est pris peut être retardé d'incréments de 4/3 $\mu$.s par rapport au moment d'émission des incréments.

Dans l'étude de F.D. McLeod intitulée "Multichannel pulse Doppler techniques" publiée aux pages 86 à 107 du livre ci-après : R.S. Renneman, cardiovascular application of ultrasonics; Proceedings of an International Symposium held at Beerse, May 29 and 30, 1973; Amsterdam, North-Holland 1974, il est décrit le principe général d'une technique Doppler multicanaux pour applications médicales, en prenant en considération les limitations de la méthode du point de vue du rapport signal/bruit, filtration, calibration du filtrage, effets des parois stationnaires, etc. Il n'est pas question de mesures pratiques. Les canaux de cette étude ne sont pas groupés pour former une fenêtre pouvant être positionnée selon les besoins de l'observation de l'écoulement du fluide dans une région de l'espace.

Dans le brevet USA No 4.324.258 (Huebscher et al) on décrit un dispositif permettant d'obtenir la vitesse correcte d'écoulement d'un fluide dans un vaisseau avec une résolution élevée. Il n'est pas question dans ce dispositif d'une fenêtre déplaçable pour limiter la mesure des vitesses dans telle ou telle partie choisie d'une région de l'espace où le liquide s'écoule.

La présente invention a pour but de remédier aux inconvénients précités et d'améliorer les appareils connus en créant un appareil permettant d'étudier de façon aisée et fiable des zones d'observation très variables avec une résolution optimale, tout en permettant un agencement électronique simple, fiable avec un nombre de composants très réduit, donc d'un coût de revient peu élevé.

L'invention est caractérisée, à cet effet, par les caractéristiques figurant dans la revendication unique.

Par ces caractéristiques, on obtient plusieurs manières de déterminer activement la fin de la fenêtre de mesure et une grande flexibilité d'utilisation, tout en assurant un contrôle aisé et rapide de l'investigation et en obtenant un équipement d'investigation sûr et d'un coût de revient peu élevé.

D'autres avantages ressortent de la description exposant ci-après l'invention plus en détail à l'aide de dessins qui représentent schématiquement et à titre d'exemple un mode d'exécution de l'appareil.

Fig. 1 est un schéma bloc de l'ensemble de cette forme d'exécution de l'appareil;
Fig. 2a - 2e sont des diagrammes explicatifs;
Fig. 3 est le schéma bloc d'un des composants de l'ensemble selon fig. 1;
Fig. 4a - 4d sont des diagrammes explicatifs du fonctionnement de l'appareil selon fig. 1;
Fig. 5 illustre un exemple d'utilisation de l'appareil selon fig. 1.
Fig. 6 montre le diagramme des vitesses dans le cas de la fig. 5.
Fig. 7 montre schématiquement l'utilisation d'un appareil selon fig. 1, pour obtenir le vecteur des vitesses en différents points d'un plan, dans la masse de fluide en mouvement.

La figure 1 représente, sous forme d'un schéma-bloc celle forme d'exécution de l'appareil. On voit en 1 un liquide ou autre fluide dans lequel flottent des particules solides, et qui est en mouvement, comme le montrent les flèches. Ce liquide est placé à l'intérieur d'un récipient dont on voit une paroi épaisse en 2. En 3 est représenté schématiquement l'axe d'un transducteur 4 servant à générer des ultrasons qui se propagent selon l'axe 3 (oblique par rapport à la paroi 2) et à recevoir l'écho, c'est-à-dire les ondes réfléchies par les particules se trouvant sur l'axe 3.

Un exemple d'un tel transducteur est décrit dans la publication suivante : The design of efficient broad-band piezoelectric transducers; Charles S. Desilets, John D. Fraser and Gordon S. Kino; IEEE Transactions on Sonics and Ultrasonics, vol. SU-25, No 3, p. 115-125.

Le signal d'écho reçu par le transducteur 4 commande une succession d'organes connus servant à fournir à un tube à écran cathodique 14 une image représentant l'effet Doppler dû à la réflexion par les particules en mouvement, cet effet Doppler étant représenté alors par une courbe qui est aussi une représentation de la composante de la vitesse du liquide selon l'axe 3, en fonction de la distance au transducteur 4 le long de l'axe 3. En même temps, l'appareil fournit de façon connue et sous forme digitale les informations relatives à cette courbe de vitesse à un ordinateur 12 qui lui-même fournit le résultat de son traitement de ces informations par une sortie 15, notamment la vitesse absolue des différentes parties du liquide mesurée le long de l'axe 3.

Les moyens connus permettant de réaliser l'échographie Doppler ultrasonique sont représentés par les éléments 7, 8, 9, 10 et 11 que l'on va décrire très sommairement, vu qu'ils appartiennent à une technique connue. 7 est un atténuateur de correction destiné à compenser l'atténuation des ultrasons le long de leur chemin aller et retour sur l'axe 3. Le coefficient d'atténuation A est calculé par les formules suivantes :

$$A(t) = a(t).b(t)$$

$$a(t) = h.t$$

$$b(t) = k.exp.\ (f.t)$$

Dans ces formules, t est le temps correspondant à chaque position le long de l'axe 3, h est la longueur du chemin parcouru le long de l'axe 3, f est la fréquence des oscillations ultrasoniques et k est un coefficient qui dépend de la nature du liquide.

8 est un démodulateur classique, 9 est un convertisseur analogique-digital, 10 est un filtre digital servant à éliminer les composantes parasites de la fréquence qui se produisent soit à partir de certaines sources de bruit indésirables, soit par suite d'un mouvement du récipient ou du conduit où se trouve le liquide. Un exemple d'un tel filtre se trouve dans la publication suivante : Urkowitz, H. : Analysis and synthesis of delay fine periodic filters: IRE Trans. Circuit theory, CT-4, 41, 1957. 11 est un détecteur de décalage Doppler tel qu'il est utilisé de façon classique dans l'échographie Doppler ultrasonique. 12 est un ordinateur.

L'appareil représenté comprend en outre un transmetteur 5 fournissant au transducteur 4 des oscillations électriques de fréquence f, qu'il transforme en ondes ultrasonores. Ce transmetteur fournit en même temps ces oscillations à un dispositif 6 qui est représenté en détail sur la figure 3.

Ce dispositif 6 comprend un organe de retardement 20 qui est réglable et qui sert à retarder d'une quantité choisie le passage des impulsions lui arrivant en 16, en supprimant un certain nombre des oscillations lui arrivant en premier. Un oscillateur 22 également réglable sert à fournir périodiquement des intervalles de temps $\tau$. 23 est un compteur d'impulsions qu'il reçoit de l'oscillateur 22, ce nombre étant celui du nombre de canaux d'observation d'effet Doppler avec lequel on désire travailler. Ce compteur 23 est commandé par le dispositif de retardement 20, de façon à ne commencer à compter le nombre d'impulsions voulu (choisi selon la position de son organe de réglage 26) qu'avec le retard produit par 20. Ce dispositif 6 comporte en outre un flip-flop 21, une porte OR 24 et une porte AND 25. Le fonctionnement de ce dispositif sera expliqué plus loin.

Si, comme cela arrive dans certaines applications industrielles, le liquide se trouve soit à haute température, soit à l'intérieur d'un conteneur ayant une paroi trés épaisse par rapport à la couche de liquide à examiner, cela pose un problème parce que dans les deux cas le transducteur 4 se trouve à une distance du liquide qui est importante par rapport à l'épaisseur de liquide à étudier, ce qui a un effet défavorable sur la résolution lors de l'analyse Doppler. En effet, si le liquide est à haute température et que la paroi est relativement mince, il faut prévoir une distance d'isolation thermique entre la paroi 2 et le transducteur 4.

Les figures 2 montrent schématiquement ce qui se passe du point de vue acoustique dans l'appareil selon figures 1 et 3. On voit sur la figure 2a un train d'ondes ultrasonores sinusoïdales 27 émis par le transducteur 4 et en 28 le train d'ondes suivant émis par ce même transducteur. F représente la fréquence de répétition des trains d'ondes et T la période de répétition. Sur la figure 2b, on voit les trains d'ondes reçus en retour par le transducteur 4; en 27a on a un premier train d'ondes qui correspond à 27 et en 28a le train d'ondes correspondant à 28. La durée de ces trains d'ondes est un peu supérieure à celle représentée en 27 et 28 en raison de réflexions internes à l'intérieur du transducteur.

La figure 2c représente un exemple d'image de la courbe des composantes axiales des vitesses le long de l'axe 3, telle qu'elle apparaît sur l'écran du tube cathodique 14. La partie horizontale de gauche $T_1$ est le temps correspondant à une vitesse nulle du liquide, qui est compris entre le début de T et l'instant où les ondes ultrasonores atteignent le liquide. La courbe ascendante puis descendante qui fait suite à cette première partie horizontale de durée $T_1$ représente la courbe des vitesses le long de la partie de l'axe 3 qui traverse le liquide. Elle a une durée $T_0$. Une partie horizontale finale de durée $T_2$ correspond à la différence de temps entre la durée T et le temps qui s'écoule entre l'émission du train d'ondes et l'instant où celui-ci atteint la fin de la zone liquide. Si, comme il est d'usage, on fractionnait la période T en un certain nombre de canaux de mesure, on aurait une résolution relativement faible, vu la longue distance entre le transducteur et la fin de la zone étudiée. Comme on est limité dans le nombre des canaux, on serait obligé d'accepter cette limitation. Le dispositif 6 a pour principale fonction de faire porter la division en un certain nombre de canaux uniquement sur la partie intéressante du diagramme, c'est-à-dire sur la courbe ascendante puis descendante. Cela se réalise de la façon suivante. On observe la courbe (fig. 2c) sur l'écran cathodique 14 et on agit sur le dispositif 20 pour introduire un retard dans la transmission des impulsions reçues (par 16) du transmetteur 5, retard que l'on fait croître jusqu'au moment où l'on arrive au début de la partie ascendante de la courbe de figure 2c. Ce retard est $T_1$ (fig. 2c).

Par ailleurs, pour éliminer l'effet gênant de la partie non intéressante qui fait suite à l'arrivée à zéro de la partie terminale de cette courbe, on règle l'oscillateur 22 pour qu'il donne des impulsions de durée $\tau$ et on règle le compteur d'impulsions 23 sur une valeur N telle que le produit $N.\tau$ soit égal à un temps $T_0$ (fig. 2c) qui corresponde, soit exactement à la partie finale de la courbe selon figure 2c, soit à un instant aussi rapproché que possible de cette partie finale. Supposons que cela soit atteint, alors le flip-flop 21 laissera passer (après le temps de retard $T_1$) les impulsions venant du transmetteur 5. C'est aussi à ce moment que le compteur 23 commence à compter et qui est, comme on l'a vu, le moment où la courbe selon figure 2c commence sa partie ascendante. Lorsque la courbe selon figure 2c arrive à zéro dans sa partie finale, le compteur 23 aura compté le nombre choisi d'impulsions de durée $\tau$ et il agira alors par sa sortie 26, sur le flip-flop 21 par l'intermédiaire de la porte OR 24, pour le mettre en position OFF où il arrête le passage des impulsions lui parvenant de 20. Si l'on n'a pas réussi à trouver un produit $\tau.N$ qui situe la fin du comptage avant la fin de la période T (fig 2a), alors les choses se passent de la façon suivante: l'apparition en 16 du début du train d'ondes suivant le train 28 arrive à la porte OR 24 avant que le comptage en 23 soit terminé et c'est alors cette impulsion de début de train d'ultrasons qui agit sur le flip-flop pour le mettre en position OFF et arrêter le passage des impulsions venant de 20. Dans ce cas, la partie finale du comptage est sans effet puisqu'elle tombe en dehors de la période T.

La figure 2d montre schématiquement le fonctionnement du flip-flop 21 dont on voit en 29 l'instant où il ouvre le passage et en 30 l'instant où il le ferme. L'intervalle de temps $T_0$ compris entre ces deux instants constitue une fenêtre de mesure. C'est durant ce temps $T_0$ qu'a lieu le calcul de la vitesse dans les N canaux choisis. En pratique, on choisira le nombre N aussi élevé que possible. En effet, c'est le nombre N de canaux de mesure qui détermine le degré de résolution.

Le dispositif 11 fournit à sa sortie, sous forme digitale, pour chacun des canaux de mesure, la valeur de la composante de la vitesse selon l'axe 3 qui parvient, d'une part, au dispositif 13 de conversion digitale analogique qui, à son tour, transmet les informations au tube cathodique 14. Par ailleurs, les informations fournies par le dispositif 11 sont envoyées sous forme digitale à l'ordinateur 12 pour traitement de ces informations et notamment pour calculer la vitesse absolue aux points de mesure le long de l'axe acoustique 3. Un exemple d'un tel dispositif est décrit dans le brevet USA No 3.514.747 et dans la publication suivante : Accuracy and limitations of the ultrasonic Doppler blood velocimeter and zero crossing detector; M.J. Lunt; Ultrasound in Medicine and Biology, vol. 2, 1975, p. 1-10.

Grâce à la fenêtre 29, 30, ce qui va apparaître sur l'écran du tube 14 sera uniquement la courbe de l'effet Doppler ou courbe des composantes des vitesses le long de l'axe 3 pendant le temps $T_0$, les parties de durées $T_1$ et $T_2$ correspondant au trajet des ultrasons en dehors du liquide étant éliminées.

On voit qu'ainsi l'appareil décrit permet de concentrer les canaux de mesure sur la partie utile de la courbe Doppler en ignorant complètement ce qui se passe lors du trajet des ultrasons en dehors de la zone liquide intéressante, d'où définition maximum. Cette zone liquide n'est d'ailleurs pas forcément limitée par les parois du conteneur, elle peut être plus restreinte et se limiter à une région particulière du liquide dans laquelle on désire étudier de prés un phénomène lié à la répartition des vitesses. Il suffit pour cela d'ajuster l'ouverture 29 et la fermeture 30 de la fenêtre à la partie de la courbe des vitesses correspondant à cette région.

Les figures 4 montrent schématiquement comment les choses se passent dans la pratique lors du choix du nombre N. Ces exemples supposent que l'on a (fig. 4a) un écoulement de liquide 31 dans un conduit 32 et que l'on a un profil des vitesses selon la courbe 33 tel qu'on a pu l'établir au moyen du transducteur 34, par la méthode qui vient d'être décrite. Fig. 4b, 4c et 4d correspondent à des exemples de profils Doppler pour différentes combinaisons de valeurs de $\tau$ et N.

On a choisi la fenêtre de mesure comme indiqué en $T_b$ sur la fig. 4b.

On commence par choisir, par exemple, N = 16, ce qui nous donne un diagramme des vitesses selon figure 4b qui entre assez exactement dans la fenêtre de mesure $T_0$, car 12 canaux tombent dans le temps $T_0$, 4 canaux qui viendraient ensuite sont supprimés par l'impulsion de début du train d'ultrasons suivant, comme on l'a vu plus haut. Si on avait choisi N = 8, le diagramme des vitesses serait tronqué du côté droit, la courbe s'arrêtant après le huitième canal, comme représenté sur la figure 4c, où l'on a la même valeur $\tau$ que dans le cas de la figure 4b. Si, par contre, on avait choisi N = 8 et une valeur $\tau'$ plus grande que $\tau$, on aurait alors un diagramme comme représenté à la figure 4d, où la résolution serait moins bonne et 2 canaux seraient exclus parce que tombant après la fin de $T_d$. Ainsi donc, on a trois façons de fixer la fermeture 30 (fig. 2d) de la fenêtre : en choisissant N au moyen du compteur 22, en choisissant $\tau$ au moyen de l'oscillateur 22, en utilisant le début du train d'ultrasons suivant.

La fréquence f des ultrasons est déterminée par l'étendue du profil de vitesses à mesurer, par les vitesses maxima et minima de propagation du son dans les milieux traversés, par l'atténuation et la résolution requises. Le nombre maximum $N_{max}$ de canaux de mesure est fixe; il est dépendant indirectement de la formule Doppler

$$v = \frac{c.f_D}{2f}$$

où

- v = vitesse du fluide
- c = vitesse du son dans le fluide
- $f_D$ = fréquence Doppler
- f = fréquence des ultrasons utilisés.

et par la relation de fréquence de Nyquist:

$$f_D \leqq \frac{F}{2}$$

où F est la fréquence de répétition des trains d'ultrasons.

On a avantage à prévoir la possibilité d'emploi de deux fréquences d'ultrasons différentes, à choix et selon les conditions : une fréquence relativement basse que l'on utilisera pour de grands profils de mesure, et une fréquence plus élevée pour des profils de mesure plus courts. On rend ainsi possible une grande marge de distance de mesure et de résolution de position. Ceci permet d'abaisser le niveau minimum détectable des vitesses ou vitesse de seuil.

Les trains d'ultrasons émis par le transducteur peuvent être réglés de façon connue en durée et en amplitude, selon le coefficient d'atténuation A du fluide (voir plus haut) et l'exactitude et la résolution requises.

Le nombre d'oscillations sinusoïdales de chaque train d'ultrasons peut être réglé, par exemple comme il est décrit dans la publication suivante : McLeod, F.D., Anliker, M. : A multiple gate pulse Doppler flowmeter : Proc. IEEE Ultrasonics, Miami, 1971.

Le fait de prévoir une fenêtre, comme décrit, pour le signal reçu qui doit être analysé selon l'échographie Doppler, a pour avantages de permettre d'avoir une distance importante entre le transducteur et le fluide dont on veut connaître le profil des vitesses, de pouvoir choisir avec une grande liberté la région du fluide que l'on veut soumettre à l'analyse Doppler, et d'obtenir une résolution plus élevée que dans la méthode classique, à nombre de canaux de mesure égal.

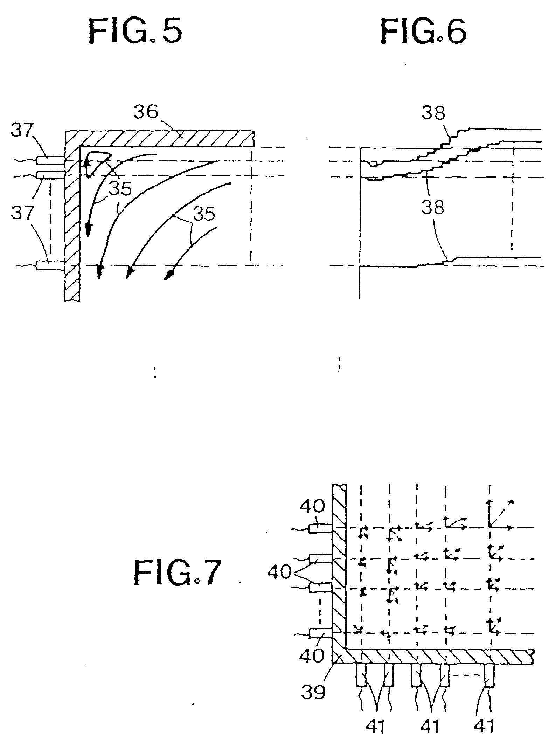

La figure 5 illustre un exemple d'utilisation de l'appareil selon figure 1 dans le cas où l'on veut connaître la distribution des vitesses selon plusieurs lignes parallèles d'un plan. On admet qu'il s'agit d'un écoulement dans une partie anguleuse d'une cuve ou d'une conduite. Les différentes lignes 35 représentent des trajectoires de différents points de la masse liquide. En 36 est représentée la paroi de la cuve ou de la conduite et, en 37, une série de transducteurs tels que 4 (fig. 1) disposés dans un même plan et avec des axes parallèles et équidistants. Le diagramme des vitesses 38 établi par échographie Doppler est représenté schématiquement sur la figure 6, en correspondance avec les axes des transducteurs 37. Les vitesses dont il s'agit sont bien entendu la composante de la vitesse réelle selon l'axe acoustique du transducteur respectif.

Pour établir les diagrammes selon figure 6, on peut avoir soit effectivement une série de transducteurs 37 et pour chacun d'eux un appareillage selon figure 1 ou bien avoir une série de transducteurs 37 et un seul appareillage selon figure 1 qui est utilisé successivement pour les différents transducteurs grâce à un commutateur électronique. On peut encore prévoir, si le facteur temps de mesure n'est pas de première importance, un seul transducteur 37 avec un appareillage électronique selon figure 1 et une commande mécanique déplaçant pas à pas ce transducteur pour l'amener successivement dans les différentes positions illustrées sur la fig. 5 par des transducteurs différents.

La figure 7 montre comment on peut établir au moyen d'un ensemble d'appareils selon figure 1 la vitesse vectorielle, c'est-à-dire en grandeur et en direction dans un plan. Sur cette figure on voit en 39 l'angle d'une cuve analogue à 36 sur la figure 5. On voit en 40 une série de transducteurs parallèles et également espacés, analogues à 37 sur la figure 1 et, en 41, une autre série de transducteurs orientés suivant des directions perpendiculaires à celle des transducteurs 40. Les mesures effectuées par les transducteurs 40 et celles exécutées par les transducteurs 41 permettent d'établir pour chaque point d'intersection des axes acoustiques représentés en pointillé sur la figure 7, la composante de la vitesse selon chacun de ces axes et la résultante. L'ordinateur 12 de la figure 1 permet sans autre de calculer ces composantes et leur résultante.

Bien entendu, on pourrait généraliser à la troisième dimension en disposant au-dessus de chaque transducteur 40, 41, une série de transducteurs espacés régulièrement. Si l'on a, par exemple, cinq transducteurs suivant chaque direction on aura au total, dans le cas de trois dimensions, 5 x 5 x 5 = 125 transducteurs. Comme expliqué plus haut, on pourra, par un balayage, utiliser un nombre moindre de circuits.

Le temps de mesure pour obtenir le profil des vitesses selon un axe acoustique étant très petit (de l'ordre de la dizaine de millisecondes) par rapport à la constante de temps des fluctuations de l'écoulement du fluide, on peut analyser aussi bien des écoulements non stationnaires, que des écoulements stationnaires.

## Revendications

1. Appareil pour la détermination par échographie Doppler ultrasonique des vitesses locales à l'intérieur d'une région choisie d'une masse de fluide (1) en mouvement contenant des particules solides, du type comprenant au moins un transducteur (4) actif durant une pluralité de cycles pour émettre à travers ce fluide (1) et selon un axe acoustique (3) des trains périodiques d'ultrasons (27, 28) au cours de cycles successifs de période T, et pour recevoir l'écho (27a, 28a) dû à la réflexion selon cet axe (3) de ces trains d'ondes par lesdites particules, des moyens pour mesurer la vitesse du fluide, au moins un circuit (7-11, 13) pour commander l'affichage sur un écran cathodique (14) de la courbe des vitesses de l'effet Doppler dû à la vitesse des particules et représentative de la vitesse du fluide en fonction de la distance le long de cet axe (3), l'appareil comportant un générateur (6) d'une fenêtre de mesure d'une position, d'une largeur et d'un nombre de canaux donnés, ce générateur présentant des moyens de retard (20) pour définir ladite position de la fenêtre constitués par un circuit (20) de retard agencé de façon à couper à chacun des cycles la transmission du transducteur (4) au moins au tube à écran cathodique (14) au moins pendant une durée initiale T1 qui précède le début de la partie ascendante de la courbe des vitesses, de façon que le début de la fenêtre de mesure est déterminé par ladite durée initiale T1, le générateur de fenêtre (6) comportant, en outre, un oscillateur (22) à fréquence réglable pour fournir périodiquement des impulsions d'une durée prédéterminée $\tau$ correspondante à la durée d'un canal de mesure contenu dans ladite fenêtre et des moyens pour régler la fréquence de cet oscillateur (22), lesdits moyens pour mesurer la vitesse du fluide étant agencés de façon à déterminer la vitesse pour chacun des canaux de mesure contenu dans la fenêtre de mesure,
caractérisé par le fait que le générateur de fenêtres (6) comprend un compteur d'impulsions réglable (23) couplé à l'oscillateur (22) et au circuit de retard (20) et des moyens pour régler ce compteur d'impulsions (23) pour choisir le nombre N de canaux de mesure, la fin de la fenêtre de mesure étant déterminée soit en sélectionnant la durée $\tau$ d'un canal, soit en sélectionnant le nombre N de canaux de la fenêtre, soit par l'arrivée du début du train d'ultrasons suivant émis après une période T au cas où la durée totale $T1+\tau*N$ est supérieure à la période T, ledit générateur de fenêtre (6) comprenant une entrée (16) reliée par l'intermédiaire d'un transmetteur (5) audit transducteur (4) et au moins une sortie reliée auxdits moyens pour mesurer la vitesse (9 à 11), l'entrée (16) du générateur étant connectée audit circuit de retard (20) qui à son tour est relié à l'entrée ON d'un élément Flip-Flop (21), dont la sortie est connectée à l'une des entrées d'un élément AND (25), la sortie duquel étant reliée auxdits moyens pour mesurer la vitesse (9 à 11), la sortie de l'oscillateur (22) étant couplée, d'une part, à l'entrée du compteur d'impulsions réglable (23) qui est commandé par la sortie dudit circuit de retard (20) et, d'autre part, à l'autre entrée de l'élément AND (25), la sortie du compteur d'impulsions (23) étant connectée à l'une des entrées d'un élément OR (24), dont l'autre entrée est reliée à l'entrée (16) du générateur de fenêtre (6) et dont la sortie est connectée à l'entrée OFF de l'élément FLIP-FLOP (21).

## Patentansprüche

1. Vorrichtung zur Bestimmung der lokalen Geschwindigkeiten im Inneren eines ausgewählten Gebiets einer in Bewegung befindlichen Fluidmasse (1) mit Festteilchen durch Doppler-Ultraschall-Echoaufzeichnung, die zu dem Typ gehört, der zumindest einen Umformer (4) enthält, der während einer Mehrzahl von Zyklen angeregt wird, um durch dieses Fluidum (1) entlang einer akustischen Achse (3) in aufeinanderfolgenden Zyklen der Periode T periodische Ultraschallwellenzüge (27, 28) auszusenden und das Echo (27a, 28a) der an den benannten Teilchen entlang dieser Achse (3) zurückgeworfenen Wellenzüge aufzufangen, und der weiterhin Mittel aufweist, um die Geschwindigkeit des Fluidums zu messen, sowie zumindest einen Schaltkreis (7 bis 11, 13), um die Kurve der Geschwindigkeiten des durch die Geschwindigkeit der Teilchen hervorgerufenen Dopplereffekts, der für die Geschwindigkeit des Fluidums repräsentativ ist, in Abhängigkeit von der Entfernung entlang dieser Achse (3) auf dem Bildschirm einer Kathodenstrahlröhre (14) anzuzeigen, wobei die Vorrichtung einen Generator (6) für ein Messfenster gegebener Lage, Länge und Kanalanzahl enthält, der Verzögerungsmittel (20) aufweist, um die benannte Lage des Fensters festzulegen, und die aus einem Verzögerungskreis (20) bestehen, der so ausgelegt ist, dass in jedem der Zyklen zumindest während einer anfänglichen Zeitdauer T1, die dem Beginn der ansteigenden Partie der Geschwindigkeitskurve vorausgeht, die Signalübergabe vom Umformer (4) zur Bildröhre (14) derart abgeschnitten wird, dass der Beginn des Messfensters durch die benannte anfängliche Zeitdauer T1 bestimmt wird, wobei der Fenstergenerator (6) ausserdem einen Oszillator (22) mit regelbarer Frequenz enthält, um periodisch Schwingungen einer vorbestimmten Dauer $\tau$ zu liefern, die der Zeitauflösung eines in dem benannten Fenster enthaltenen Messkanals entspricht, sowie Mittel, um die Frequenz dieses Oszillators (22) einzustellen, wobei die benannten Mittel zur Messung der Fluidgeschwindigkeit so eingerichtet sind, dass die Geschwindigkeit für jeden der im Messfenster enthaltenen Messkanäle bestimmt wird,
dadurch gekennzeichnet, dass der Fenstergenerator einen einstellbaren Schwingungszähler (23), der an den Oszillator (22) und den Verzögerungskreis (20) angeschlossen ist, und Mittel umfasst, um diesen Schwingungszähler (23) so einzustellen, dass damit die Zahl N der Messkanäle ausgewählt werden kann, wobei das Ende des Messfensters entweder durch die gewählte Dauer $\tau$ eines Kanals, durch die Zahl N der Fensterkanäle oder durch den Anfang des folgenden Ultraschallwellenzugs bestimmt wird, der nach einer Periode T ausgesendet wird, wenn die gesamte Zeitdauer $T1 + \tau * N$ länger als die Periode T ist, und wobei der benannte Fenstergenerator (6) einen Eingang (16), der vermittels eines Gebers (5) an den benannten Umformer (4) angeschlossen ist, sowie zumindest einen Ausgang umfasst, der an die benannten Mittel zur Geschwindigkeitsmessung (9 bis 11) angeschlossen ist, wobei der Eingang (16) des Generators mit dem benannten Verzögerungskreis (20) verbunden ist, der seinerseits mit dem Eingang "ON" eines Flipflopgliedes (21) verbunden ist, dessen Ausgang mit einem der Eingänge eines "AND"-Gliedes (25) verbunden ist, dessen Ausgang mit den benannten Mitteln zur Geschwindigkeitsmessung (9 bis 11) verbunden ist, wobei der Ausgang des Oszillators (22) einerseits an den Eingang des einstellbaren Schwingungszählers (23), der vom Ausgang des benannten Verzögerungskreises (20) gesteuert wird, und andererseits an den anderen Eingang des "AND"-Gliedes (25) angeschlossen ist, wobei der Ausgang des Schwingungszählers (23) mit einem der Eingänge eines "OR"-Gliedes (24) verbunden ist, dessen anderer Eingang mit dem Eingang (16) des Fenstergenerators (6) verbunden ist und dessen Ausgang mit dem "OFF"-Eingang des Flipflopgliedes (21) verbunden ist.

**Claims**

1. An apparatus for the determination by ultrasound Doppler echography of local speeds within a selected region of a mass of a moving fluid (1) containing solid particles, of a type including at least one transducer (4) operative for emitting during a plurality of cycles through this fluid (1) and along an acoustic axis (3) periodical trains of ultrasound (27, 28) within successive cycles of a period T and for receiving the echo (27a, 28a) resulting from the reflexion along this axis (3) of these trains of waves by said particles, means for measuring the speed of the fluid, at least one circuit (7-11, 13) for controlling the display on a screen (14) of a cathode ray tube of the speed curve derived from the Doppler effect caused by said moving particles, which curve is representative of the speed of the fluid as a function of the distance along this axis (3), the apparatus including a generator (6) for a measure window having a given position, a given width and given number of channels, this generator being provided with delaying means (20) for defining said position of the window constituted by a delay circuit (20) arranged in such a manner as to cut at each one of the cycles the transmission of the transducer (4) at least to the cathode ray tube (14) at least for an initial duration T1 which precedes the beginning of the ascending part of the speed curve, in such a manner that the beginning of the measure window is determined by said initial duration T1, the window generator (6) further including an adjustable frequency oscillator (22) for generating periodically pulses of a predetermined duration $\tau$ corresponding to the time resolution of a measure channel contained in said window and means for adjusting the frequency of this oscillator (22), said means for measuring the speed of the fluid being arranged in such a manner as to determine the speed for each one of the measure channels contained in the measure window,
characterized by the fact that window generator (6) comprises an adjustable pulse counter (23) coupled to this oscillator (22) and to said delay circuit (20) and means for adjusting this pulse counter (23) for selecting the number N of measure channels, the end of the measure window being determined, either by the choice of the duration $\tau$ of a channel, or by the number N of channels of the window, or by the beginning of the following train of ultrasound emitted after a period T, in the case of the total duration $T1 + \tau * N$ exceeding the period T, said window generator (6) including an input (16) connected through a transmitter (5) to said transducer (4) and at least one output connected to said means for measuring the speed (9 to 11), the input (16) of the generator being connected to said delay circuit (20) which in turn is connected to the ON input of a flip-flop component (21), of which the output is connected to one of the inputs of an AND component (25), of which the output is connected to said means for measuring the speed (9 to 11), the output of the oscillator (22) being coupled, on the one hand, to the input of the adjustable pulse counter (23) which is controlled by the output of said delay circuit (20) and, on the other hand, to the input of the AND component (25), the output of the pulse counter (23) being connected to one of the inputs of an OR component (24), the other input of which is connected to the input (16) of the window generator (6) and the output of which is connected to the input OFF of the flip-flop component (21).

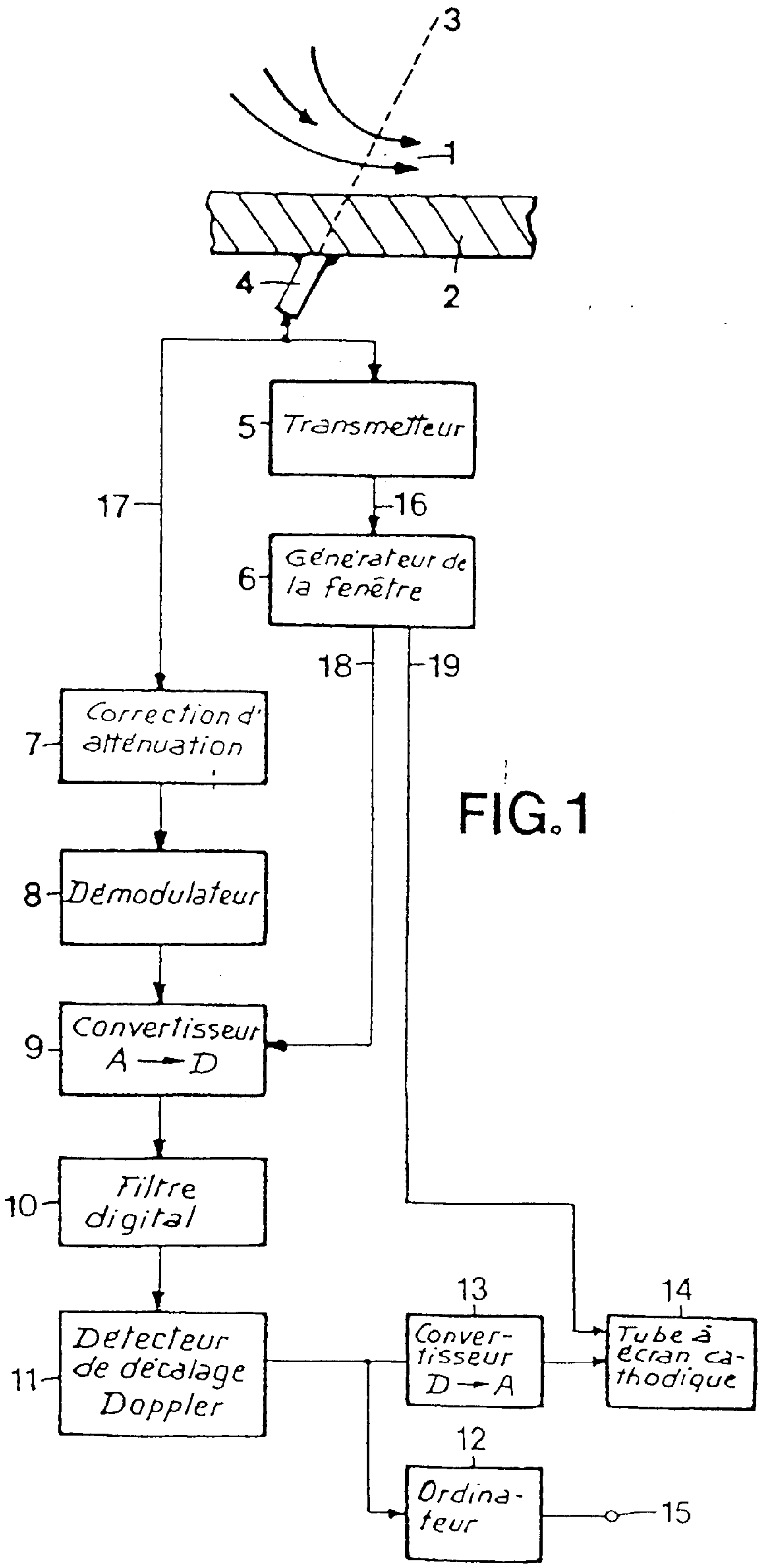
3
1
2
4
5
Transmetteur
16
17
Générateur de la fenêtre
6
18
19
7
Correction d'atténuation
8
Démodulateur
9
Convertisseur A → D
10
Filtre digital
11
Detecteur de décalage Doppler
13
Convertisseur D → A
14
Tube à écran cathodique
12
Ordinateur
15

FIG.1

FIG.2a

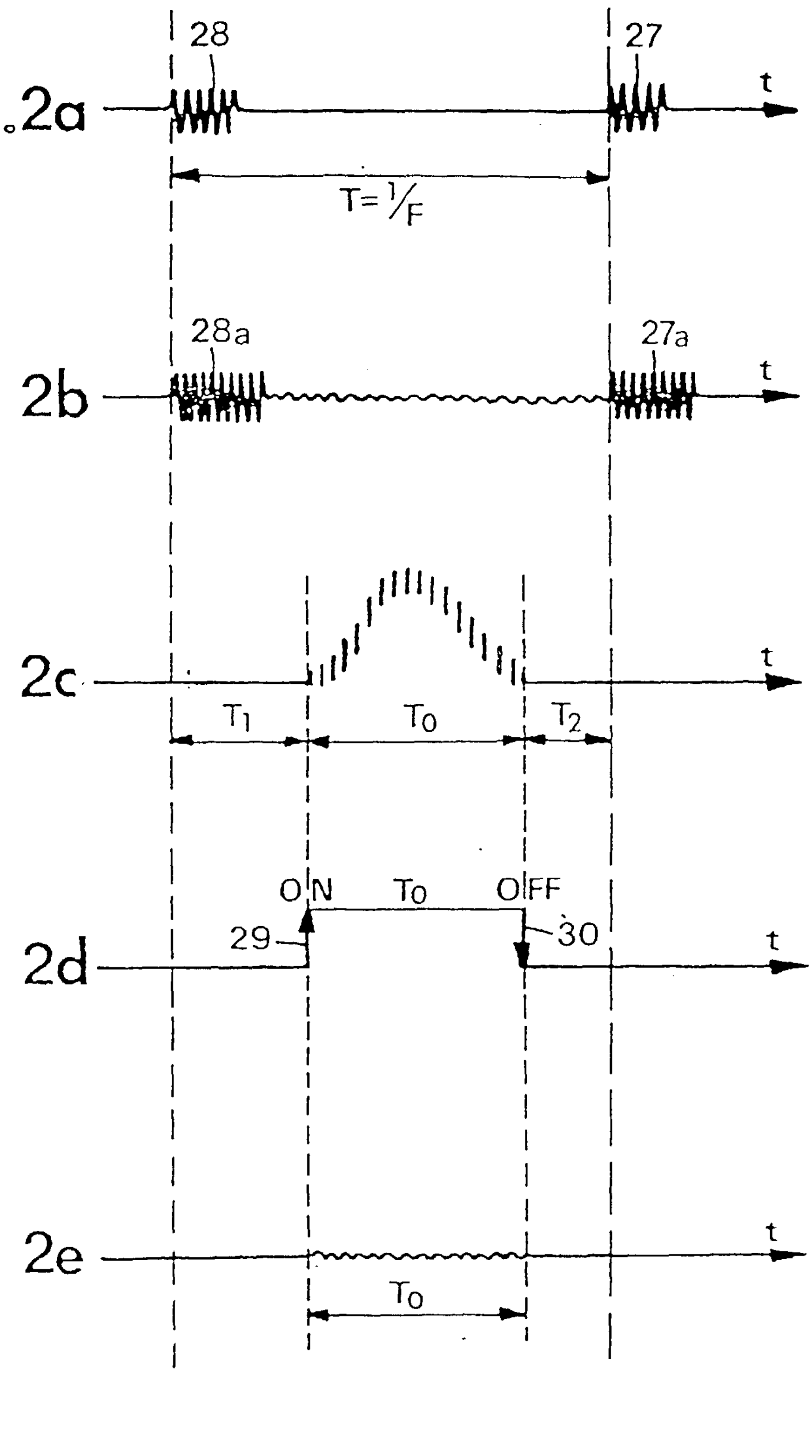

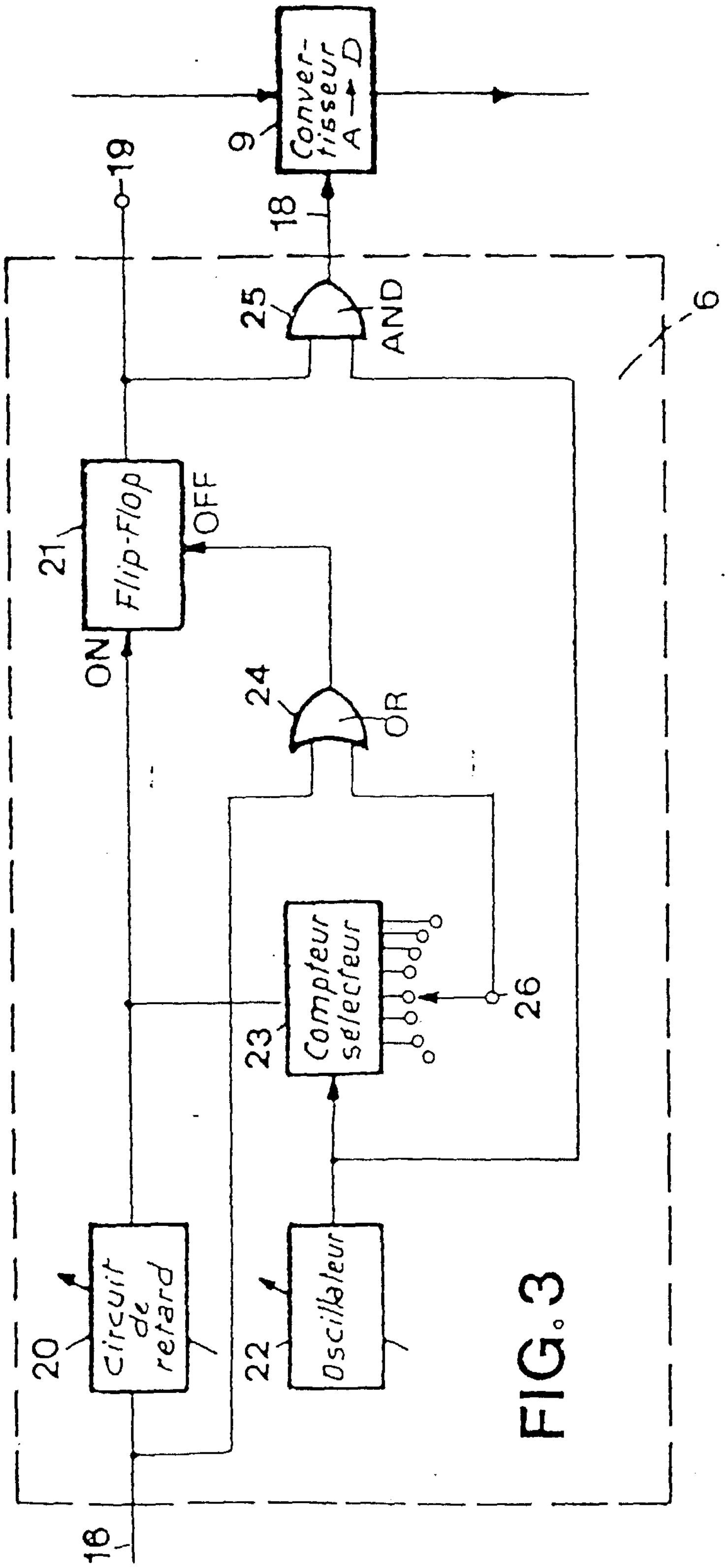
Conver-
tisseur
A → D
9
18
19
6
25
AND
Flip-Flop
21
ON
OFF
24
OR
Compteur
sélecteur
23
26
Circuit
de
retard
20
Oscillateur
22
18

FIG. 3

FIG.4a

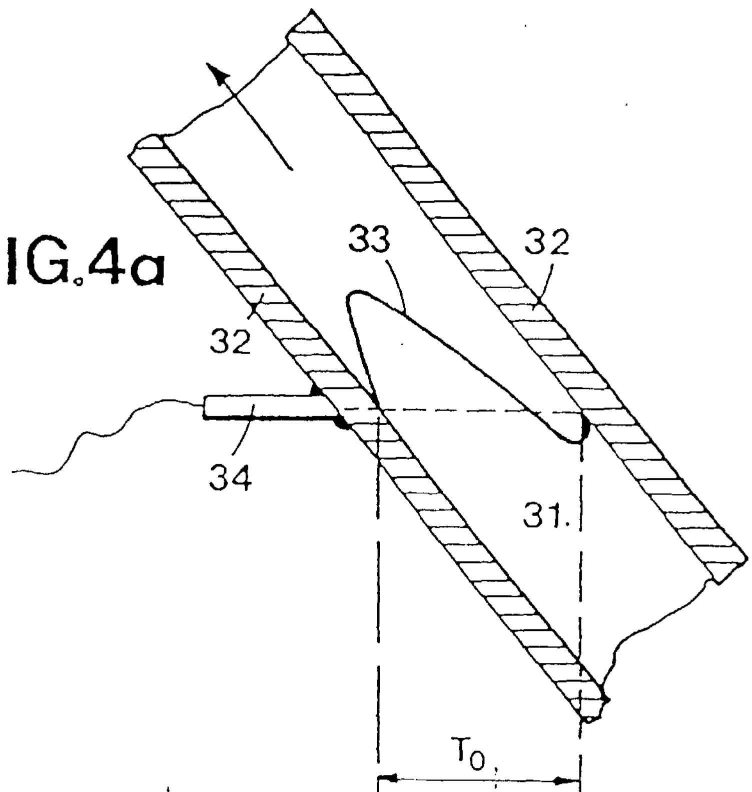


4b

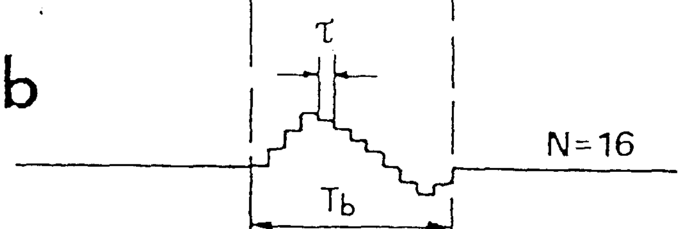


4c

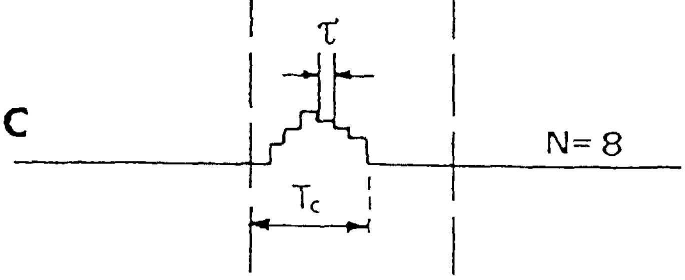


4d

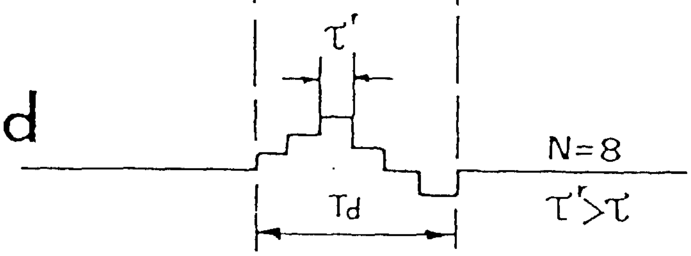

FIG. 5

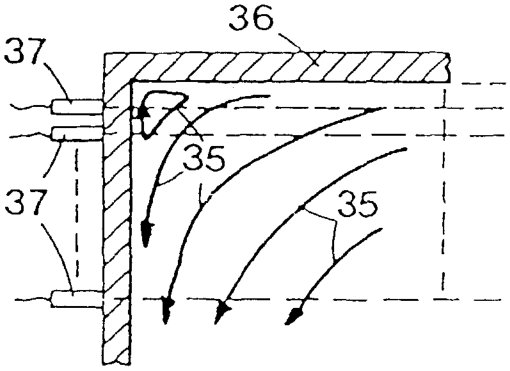


FIG. 6

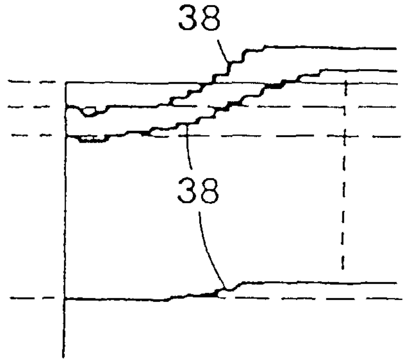


FIG. 7